# EUROPEAN PATENT SPECIFICATION

(11) **EP 4 206 462 B1**
(45) Date of publication and mention of the grant of the patent: **25.06.2025**
(21) Application number: 22827127.6
(22) Date of filing: 07.04.2022
(51) Int. Cl.: H02G 9/12, H02G 1/10, F03D 9/25, B63B 21/50, B63B 35/44

(54) **SHALLOW WATER FLOATING WIND POWER SYSTEM AND DYNAMIC CABLE ASSEMBLY THEREOF**
SCHWIMMENDES WINDKRAFTSYSTEM MIT FLACHEM WASSER UND DYNAMISCHE KABELANORDNUNG DAFÜR
SYSTÈME D'ÉNERGIE ÉOLIENNE FLOTTANT SUR EAU PEU PROFONDE ET ENSEMBLE CÂBLE DYNAMIQUE ASSOCIÉ

(30) Priority: 21.06.2021 CN 202110686385
(43) Date of publication of application: 05.07.2023
(73) Proprietor: Zhongtian Technology Submarine Cable Co., Ltd., Nantong, Jiangsu 226000 (CN)
(72) Inventor: YE, Jinyu, Nantong, Jiangsu 226000 (CN); PAN, Pan, Nantong, Jiangsu 226000 (CN); ZHU, Qingbin, Nantong, Jiangsu 226000 (CN); LIU, Dong, Nantong, Jiangsu 226000 (CN)
(74) Representative: Boult Wade Tennant LLP
(86) International application number: PCT/CN2022/085638
(87) International publication number: WO 2022/267624

(56) References cited:
- EP-A1- 2 326 794
- EP-A1- 2 727 813
- EP-A1- 2 886 787
- EP-A1- 3 249 430
- EP-B1- 2 727 813
- WO-A1-2018/056094
- WO-A1-2018/167186
- WO-A2-2020/043793
- CN-A- 107 407 133
- CN-A- 107 407 133
- CN-A- 113 217 295
- CN-U- 212 718 685
- US-A1- 2006 159 521
- US-A1- 2007 292 214
- US-A1- 2013 106 105
- US-A1- 2013 292 129
- US-A1- 2019 048 668

## Description

### TECHNICAL FIELD

The present application relate to offshore wind power generation technology, in particular to a shallow water floating wind power system and a dynamic cable assembly thereof.

### BACKGROUND

With development and application of new energy, the application of a floating wind power system has become an inevitable trend to obtain high-quality wind resources and reduce construction costs. At present, the floating wind power system is mainly used in shallow waters with water depth less than 60m. The floating wind power system includes floating fan, dynamic cable and static cable, where one end of the dynamic cable is connected with the floating fan and the other end thereof is connected with the static cable, that is, the power generated by the floating fan can be transmitted through the dynamic cable and the static cable.

At present, line shape of the dynamic cable is mainly formed by a buoyancy block or a clump weight pressing the dynamic cable into "S" or "W" shape. The "S" or "W" shape can meet drift of the floating fan in a large range, and relieve axial tension of the dynamic cable during drift of the floating fan. Specifically, both the buoyancy block and the clump weight need to be fixed to the dynamic cable, with the buoyancy block applying upward buoyancy to the dynamic cable, and the clump weight applying downward pressure to the dynamic cable, so as to set the line shape of the dynamic cable to a preset shape.

However, when a sea condition is severe, the dynamic cable will drift in a wide range under action of waves and currents. After drifting in a wide range, the dynamic cable is easy to collide with the floating fan or an anchor chain of the floating fan and then fail. Document WO2018/056094 A1 is a prior art example of a dynamic cable applied on a floating wind turbine.

### SUMMARY

Embodiments of the present application provide a shallow water floating wind power system and a dynamic cable assembly thereof to solve the problem that when the sea condition is severe, the existing dynamic cable drifts in a wide range under the action of waves and currents, and the dynamic cable after drifting in a wide range of drift is prone to collide with the floating fan or the anchor chain of the floating fan and thus resulting in failure.

According to the present invention, there is provided a dynamic cable assembly for a shallow water floating wind power system, including:
a dynamic cable, a first end of which is used to connect a floating fan, and a second end of which is used to connect a static cable;
a plurality of buoyancy units provided on the dynamic cable at intervals;
a plurality of connection units that each include a mooring chain and an elastic cable, where a bottom end of the elastic cable is fixedly connected with a seabed, a top end of the elastic cable is fixedly connected with the mooring chain near a bottom end of the mooring chain, and a top end of the mooring chain is fixedly connected with the dynamic cable;
the connection units and the buoyancy units jointly define a line shape of the dynamic cable, the line shape of the dynamic cable includes a first valley section connected with the floating fan, a plurality of peak sections connected with the first valley section and a second valley section between two adjacent peak sections; each buoyancy unit is correspondingly provided at top of one peak section, and each connection unit is correspondingly provided at a side of one peak section away from the floating fan.

In an optional implementation mode, the elastic cable includes a first connecting plate, a second connecting plate and a spring, the first connecting plate is parallel to the second connecting plate, the first connecting plate is provided above the second connecting plate, one end of the spring is fixed to the first connecting plate, and the other end of the spring is fixed to the second connecting plate; a through hole is provided in middle of the first connecting plate, a part of the mooring chain near the bottom end thereof is provided to pass through the through hole of the first connecting plate and is fixedly connected to the first connecting plate. Those skilled in the art can understand that when an impact on the dynamic cable is too large, the elastic cable may play a buffering role through extension of the spring to avoid damage to the dynamic cable at a position where the dynamic cable is connected with the mooring chain due to excessive impact.

In an optional implementation mode, the connection unit further includes a monitoring component and an anchor, the monitoring component is provided with a wireless communication module, a main body of the monitoring component is fixedly connected to the dynamic cable, and the mooring chain is a power transmission line of the monitoring component;
the anchor is fixedly connected with the seabed, and the second connecting plate is installed at top of the anchor, a middle part of the second connecting plate is provided with a through hole in middle thereof, the anchor is internally provided with a power supply, and a bottom end of the power transmission line passes through the through hole of the second connecting plate and is connected with the power supply in the interior of the anchor. Those skilled in the art can understand that the monitoring component may monitor the force and movement state of the dynamic cable at a position where the dynamic cable is connected with the mooring chain, and when the force and the displacement at the position exceed a preset value, the monitoring component sends an alarm signal to a remote device through the wireless communication module.

In an optional implementation mode, a part of the power transmission line between the first connecting plate and the second connecting plate has a length greater than maximum length to which the spring is stretched. Those skilled in the art can understand that through the above setting may ensures that the power transmission line will not be pulled and broken when the spring is stretched.

In an optional implementation mode, the main body of the monitoring component is connected with the dynamic cable through a bend limiting caliper, the bend limiting caliper includes a clamping section and cone sections provided on both sides of the clamping section, the cone section is made of an elastic material and a large diameter end of the cone section is fixedly connected with the clamping section; the dynamic cable is provided to pass inside the two cone sections, and the clamping section is fastened to a part of the dynamic cable between the two cone sections; the main body of the monitoring component is fastened to the clamping section. Those skilled in the art can understand that through the provision of the bend limiting caliper, the bend limiting caliper can limit a bending radius of the dynamic cable, avoiding rupture of outer sheath of the dynamic cable and failure of functional units of the dynamic cable due to stress concentration caused by excessive bending of the dynamic cable; and the bend limiting caliper may also increase fatigue resistance of the dynamic cable and improve service life of the dynamic cable.

In an optional implementation mode, the buoyancy unit includes a plurality of buoyancy blocks, the buoyancy blocks are fastened to the dynamic cable, and the plurality of buoyancy blocks are provided at intervals along an extension direction of the dynamic cable. Those skilled in the art can understand that through providing a plurality of buoyancy blocks, net buoyancy of the buoyancy unit may be increased, thus improving load-bearing capacity of the dynamic cable, and thus shellfish, algae and other organisms attached to the dynamic cable in shallow water are not easy to lower the line shape of the dynamic cable, reducing a risk of scraping between the dynamic cable and the seabed.

In an optional implementation mode, a distance between two adjacent buoyancy blocks in the buoyancy unit is 1-2 times the length of the buoyancy blocks. Those skilled in the art can understand that through the above setting, excessive bending can be prevented in an area of the dynamic cable between two buoyancy blocks, thereby ensuring transmission stability of the dynamic cable.

In an optional implementation mode, the dynamic cable assembly further includes a bend limiting cylinder, the bend limiting cylinder is made of an elastic material, the bend limiting cylinder is formed into a conical structure, a large diameter end of the conical structure is provided with a plurality of bolts for fastening connection with the floating fan, and the first end of the dynamic cable is provided to pass inside the conical structure and is fixedly connected with the floating fan. Those skilled in the art can understand that through the provision of the bend limiting cylinder, the first end of the dynamic cable can be prevented from excessive bending and the transmission stability of the dynamic cable can be guaranteed.

In an optional implementation mode, the dynamic cable assembly further includes a clump weight fastened to the dynamic cable, and the clump weight is installed in the first valley section. Those skilled in the art can understand that through the provision of the clump weight at a side of the first valley section facing the floating fan, the clump weight applies downward gravity to the dynamic cable, which, on the one hand, enables the dynamic cable to form the first valley section, and on the other hand, may prevent the dynamic cable from floating above sea surface.

According to another aspect of the present invention, there is provided a shallow water floating wind power system, including a floating fan, a static cable and the above-mentioned dynamic cable assembly;
the floating fan floats on sea surface, the static cable is fixed to the seabed, and one end of the dynamic cable in the dynamic cable assembly is connected with the floating fan, and the other end of the dynamic cable is connected with the static cable.

Those skilled in the art can understand that in the dynamic cable assembly for a shallow water floating wind power system according to the present application, the dynamic cable is used to connect the floating fan and the static cable, and the buoyancy unit and connection unit are both connected with the dynamic cable, the connection unit and the buoyancy unit jointly define the line shape of the dynamic cable, the line shape of the dynamic cable includes the first valley section, the peak section and the second valley section, the buoyancy unit is provided at the top of the peak section, and the connection unit is located at the side of the peak section away from the floating fan. In this way, the dynamic cable can meet a drift requirement of the floating fan through the deformation of the first valley section, the peak section and the second valley section. The side of the peak section far away from the floating fan is connected with the seabed through the connection unit, and when the sea condition is severe, the connection unit will play a limiting role on the dynamic cable, to avoid collision and failure of the dynamic cable due to a wide range of drift. In addition, since there is provided the elastic cable between the mooring chain of the connection unit and the seabed, when the impact borne by the dynamic cable is too large, the connection unit can play a buffering role by elastic deformation of the elastic cable, reducing the impact load on the dynamic cable, and avoiding the damage at the position where the dynamic cable is connected with the mooring chain due to excessive impact.

### BRIEF DESCRIPTION OF DRAWINGS

The In order to more clearly explain technical solutions in embodiments of the present application or in prior art, the following will briefly introduce drawings used in descriptions of the embodiments or prior art. It is obvious that the drawings in the following description are some embodiments of the present application, and for those skilled in the art, other drawings can be obtained from these drawings without any creative work.
FIG. 1 is a schematic structural diagram of a shallow water power generation system provided by an embodiment of the present application;
FIG. 2 is a partial enlarged schematic diagram at A in FIG. 1;
FIG. 3 is a schematic structural diagram of an elastic cable provided by an embodiment of the present application;
FIG. 4 is a schematic structural diagram of another shallow water power generation system provided by an embodiment of the present application;
FIG. 5 is a schematic structural diagram of a buoyancy block provided by an embodiment of the present application;
FIG. 6 is a left view of the buoyancy block in FIG. 5;
FIG. 7 is a schematic structural diagram of a bend limiting caliper provided by an embodiment of the present application;
FIG. 8 is a left view of the bend limiting caliper in FIG. 7;
FIG. 9 is a schematic structural diagram of a bend limiting cylinder provided by an embodiment of the present application;
FIG. 10 is a left view of the bend limiting cylinder in FIG. 9;
FIG. 11 is a schematic structural diagram of a clump weight provided by an embodiment of the present application;
FIG. 12 is a left view of the clump weight in block FIG. 11.

### Description of reference numbers:

100. dynamic cable; 110. first valley section;
120. peak section; 130. second valley section;
200. buoyancy block; 300. connection unit;
310. mooring chain; 320. elastic cable;
321. first connecting plate; 322. second connecting plate;
323. spring; 330. monitoring component;
340. anchor; 400. bend limiting caliper;
410. clamping section; 420. cone section;
500. bend limiting cylinder; 510. bolt;
600. clump weight; 700. floating fan;
800. seabed; 900. sea surface.

### DESCRIPTION OF EMBODIMENTS

First of all, those skilled in the art should understand that these embodiments are only used to explain technical principles of the present application and are not intended to limit the scope of protection of the present application. Those skilled in the art may adjust them as needed so as to adapt to specific applications.

Secondly, it should be noted that in description of the present application, terms indicating direction or position relationship, such as "inside", "outside" and the like, are based on the direction or position relationship shown in accompanying drawings, and is only for the convenience of description, not to indicate or imply that the device or the component must have a specific orientation, or be constructed and operated in a specific orientation, so those terms cannot be understood as a limitation of the present application.

At present, near-shore water depth of our country's sea area changes little, and the water depth generally does not exceed 60m. Meanwhile, environment of a sea area where a floating fan is located is usually very severe, and the floating fan will have a very large drift under loads applied by winds, waves and currents. A dynamic cable is mainly pressed into "S" or "W" shape by the buoyancy block or the clump weight. The line shape "S" or "W" ensures that the dynamic cable can meet a wide range of drift of the floating fan, and relieve axial tension of the dynamic cable during the drift of the floating fan. Specifically, both the buoyancy block and the clump weight need to be fixed to the dynamic cable, the buoyancy block applies upward buoyancy to the dynamic cable, and the clump weight applies downward pressure to the dynamic cable, so as to set a line shape of the dynamic cable to a preset shape. However, in order to ensure that the shallow water floating wind power system can generate electricity uninterruptedly, the dynamic cable must have a high degree of integrity, that is, structure of the dynamic cable cannot be damaged. When the sea condition is severe, the dynamic cable will drift in a wide range under actions of waves and currents. After the dynamic cable drifts in a wide range, on the one hand, the dynamic cable is easy to be pulled and broken in the water, and on the other hand, the dynamic cable is easy to collide with the floating fan or an anchor chain of the floating fan, and then becomes failed.

After repeated thinking and verification, the applicant found that if a part of the dynamic cable can be connected with a seabed via a connection unit, and the connection unit is provided with an elastic cable, then impact load of the dynamic cable under impact of waves and currents can be reduced through elastic deformation of the elastic cable, and the connection unit and a buoyancy unit jointly define a line shape of the dynamic cable. Where the line shape of the dynamic cable includes a first valley section connected with the floating fan, multiple peak sections connected with the first valley section, and a second valley section between two adjacent peak sections. In this way, when the floating fan drifts, the dynamic cable can meet the drift of the floating fan through deformation of the first valley section and the peak sections, and when the floating fan drifts, the deformation of the first valley section and the peak sections can relieve the axial tension of the dynamic cable. In addition, when the sea condition is severe, the connection unit can prevent the dynamic cable itself from drifting in a wide range, and avoid the dynamic cable to be collided with the floating fan or the anchor chain of the floating fan and failure.

In view of this, the applicant designed a dynamic cable assembly for the shallow water floating wind power system, including: a dynamic cable, a plurality of buoyancy units and a plurality of connection units. Where the dynamic cable is used to connect the floating fan and a static cable, and the connection units connect the dynamic cable to a seabed through an elastic cable and a mooring chain. The buoyancy units and the connection units define a line shape of the dynamic cable, the line shape of the dynamic cable includes a first valley section connected with the floating fan, a plurality of peak sections connected with the first valley section and a second valley section between adjacent two peak sections. Each buoyancy unit is correspondingly provided at top of one peak section, and each connection unit is correspondingly provided at a side of one peak section away from the floating fan. In this way, the dynamic cable can meet the drift requirement of the floating fan in a wide range. When the sea condition is severe, the connection unit can prevent the dynamic cable from drifting in a wide range and colliding with the floating fan or the anchor chain of the floating fan, resulting in failure, and furthermore, the elastic cables of the connection units can play a role in absorbing impact load to avoid the dynamic cable from being damaged due to excessive impact.

### Embodiment 1

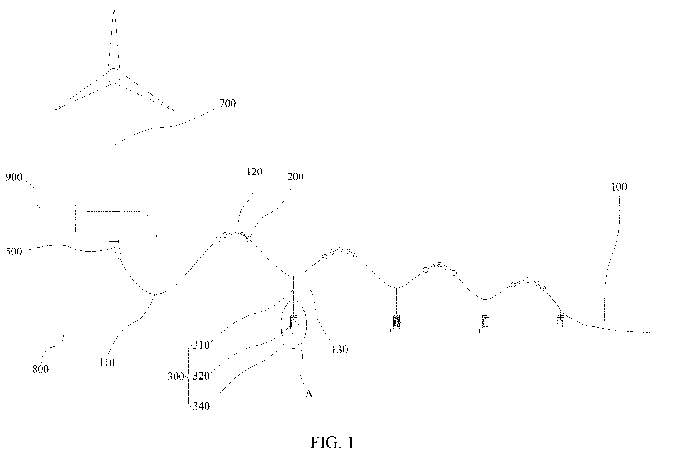

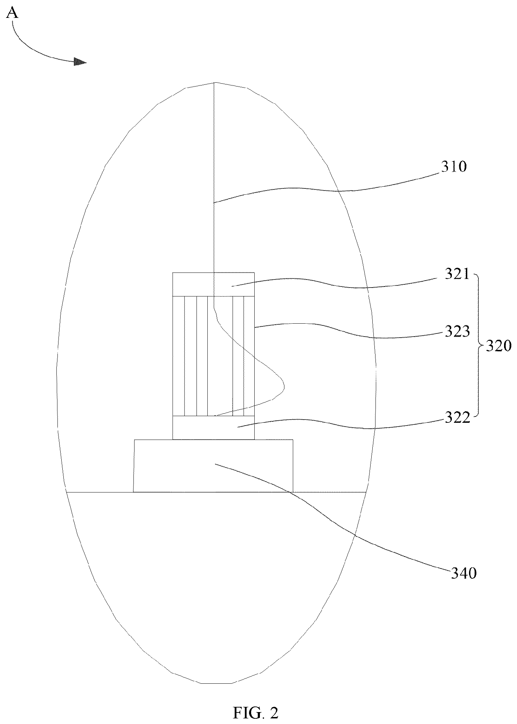

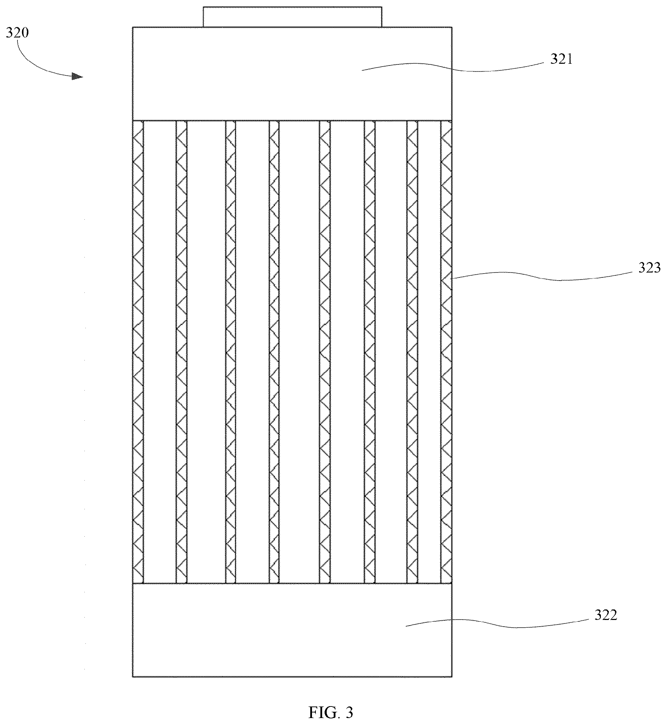

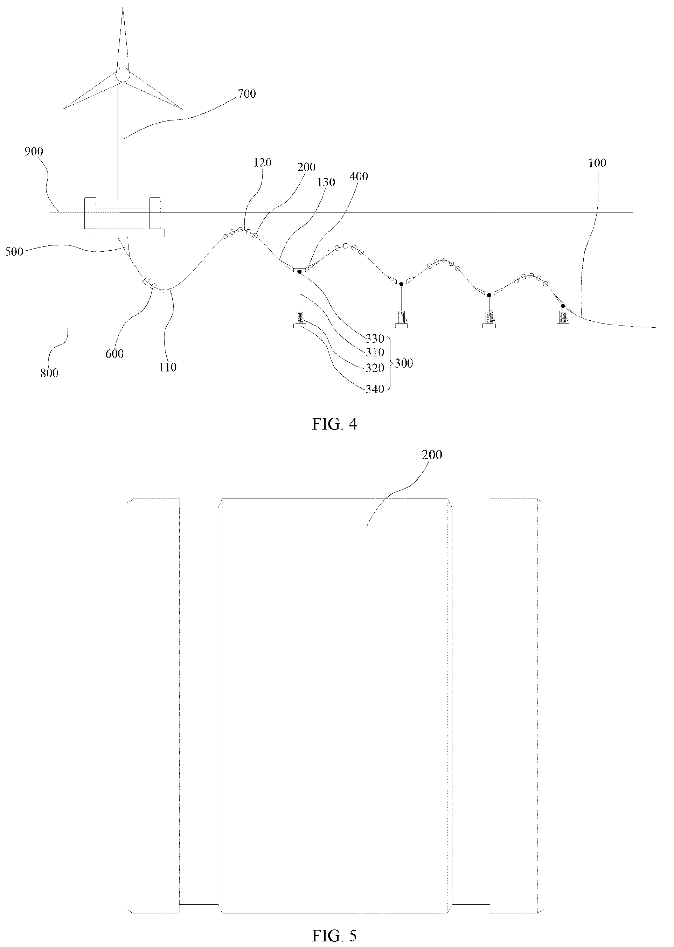

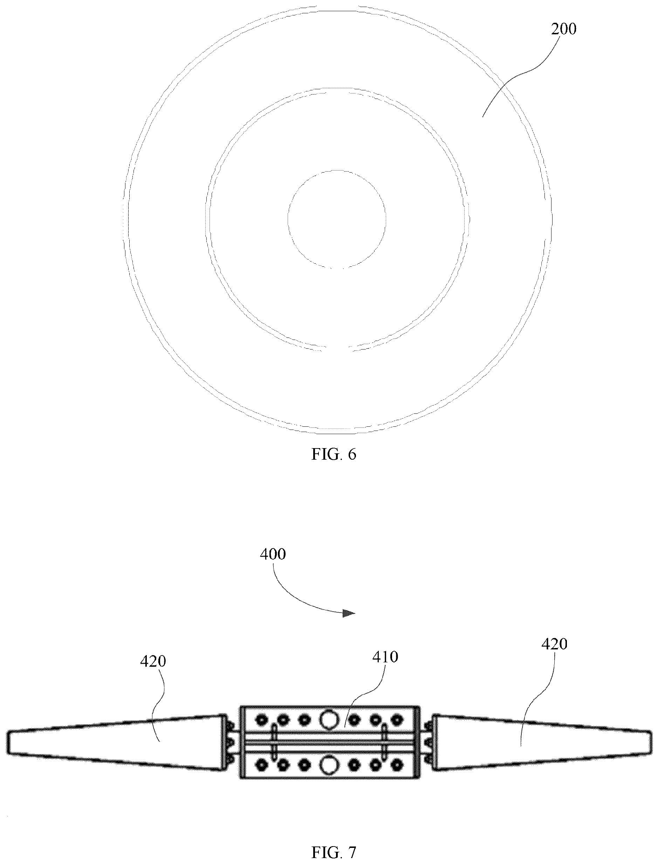

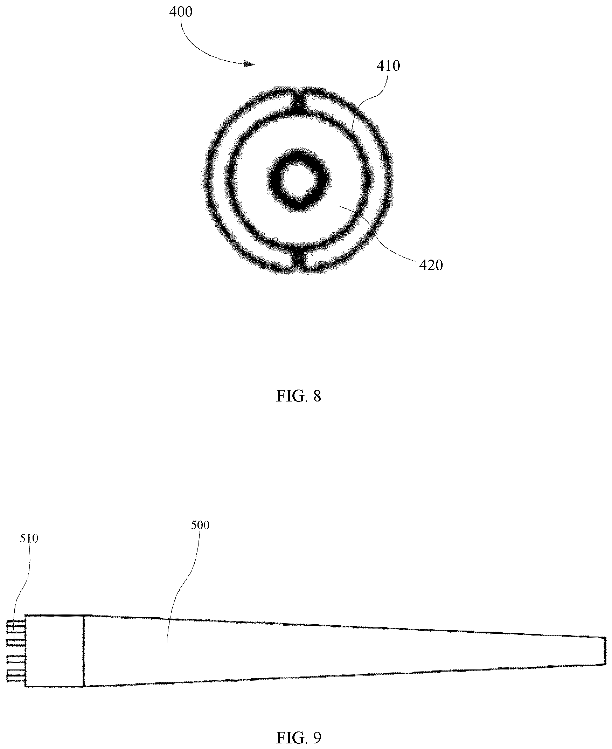

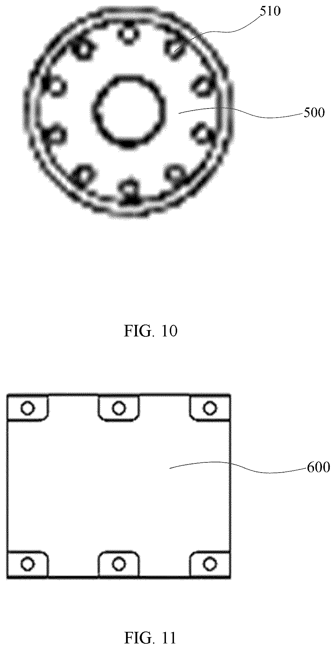

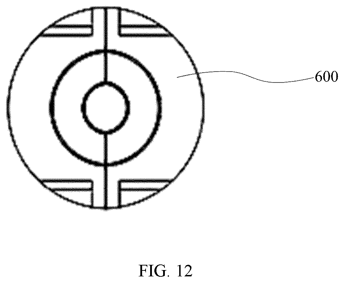

FIG. 1 is a schematic structural diagram of a shallow water power generation system provided by an embodiment of the present application; FIG. 2 is a partial enlarged schematic diagram at A in FIG. 1; FIG. 3 is a schematic structural diagram of an elastic cable provided by an embodiment of the present application; FIG. 4 is a schematic structural diagram of another shallow water power generation system provided by an embodiment of the present application; FIG. 5 is a schematic structural diagram of a buoyancy block provided by an embodiment of the present application; FIG. 6 is a left view of the buoyancy block in FIG. 5; FIG. 7 is a schematic structural diagram of a bend limiting caliper provided by an embodiment of the present application; FIG. 8 is a left view of the bend limiting caliper in FIG. 7; FIG. 9 is a schematic structural diagram of a bend limiting cylinder provided by an embodiment of the present application; FIG. 10 is a left view of the bend limiting cylinder in FIG. 9; FIG. 11 is a schematic structural diagram of a clump weight provided by an embodiment of the present application; FIG. 12 is a left view of the clump weight in FIG. 11.

As shown in FIG. 1, a dynamic cable assembly for a shallow water floating wind power system provided by this embodiment includes a dynamic cable 100, a plurality of buoyancy units and a plurality of connection units 300, where a first end of the dynamic cable 100 is used to connect a floating fan 700, and a second end of the dynamic cable 100 is used to connect a static cable. FIG. 1 shows that a left end of the dynamic cable 100 is electrically connected to the floating fan 700, and a right end of the dynamic cable 100 is used to connect the static cable such as a power cable or a static array formed by a plurality of static cables. It is easy to understand that the dynamic cable 100 can be used to transmit power and/or communication control signals. Those skilled in the art can set a specific structure of the dynamic cable 100 according to a specific type of signals transmitted by the dynamic cable 100. This embodiment here does not limit the specific structure of the dynamic cable 100.

As shown in FIGs. 1-2, the plurality of buoyancy units are provided on the dynamic cable 100 at intervals. It is easy to understand that density of the buoyancy units is less than density of sea water. The buoyancy units provided on the dynamic cable 100 can provide upward buoyancy for the dynamic cable 100. The connection unit 300 includes a mooring chain 310 and an elastic cable 320, a bottom end of the elastic cable 320 is fixedly connected with a seabed 800, a top end of the elastic cable 320 is fixedly connected with the mooring chain 310 at a position near a bottom end of the mooring chain 310, and a top end of the mooring chain 310 is fixedly connected with the dynamic cable 100. It is easy to understand that the elastic cable 320 can undergo elastic deformation when subjected to tension, thus the elastic cable will be extended in length. After the tension disappears, the length of the elastic cable 320 will return to its initial state. By providing the connection unit 300, the mooring chain 310 and the elastic cable 320 of the connection unit 300 can limit the dynamic cable 100, that is, limit maximum distance between the dynamic cable 100 connects and the seabed 800 at a position where the dynamic cable 100 is connected with the mooring chain 310. In addition, the mooring chain 310 and the elastic cable 320 can also prevent the dynamic cable 100 from rising to sea surface 900 under the buoyancy of the buoyancy unit.

Continuing to refer to FIG. 1, the connection unit 300 and the buoyancy unit jointly define the line shape of the dynamic cable 100. The line shape of the dynamic cable 100 includes a first valley section 110 connected to the floating fan 700, a plurality of peak sections 120 connected to the first valley section 110, and a second valley section 130 between two adjacent peak sections 120. Exemplarily, a length of the peak section 120 may be 1-1.5 times the depth of water. It is worth mentioning that a height of a top end of the peak section 120 is less than a height of the sea surface 900, so as to avoid aging of an outer sheath of the dynamic cable 100 due to direct sunlight onto the dynamic cable 100 and ensure service life of the dynamic cable 100. It is easy to understand that number of the peak sections 120 is not limited, and can be two or more, and those skilled in the art can provide it according to a drift amount of floating fan 700. For example, when there are a plurality of the peak sections 120, the length of the peak sections 120 can be set so that the dynamic cable 100 can meet the requirement that the drift amount of the floating fan 700 is twice the depth of water or more. Each buoyancy unit is correspondingly provided at the top of one peak section 120, that is, heights of parts of the dynamic cable 100 at both sides of the buoyancy unit are less than a height of a position of the dynamic cable 100 where the buoyancy unit is installed. Each connection unit 300 is correspondingly provided on a side of one peak section 120 away from the floating fan 700, and when the floating fan 700 drifts, the first valley section 110, the second valley section 130 and the peak section 120 can meet the drift of the floating fan 700 through deformation, and when the floating fan 700 returns to its original position, the first valley section 110, the second valley section 130 and the peak section 120 also return to their original positions so that the line shape of the dynamic cable 100 returns to its preset state, that is, a state before the floating fan 700 drifts.

Those skilled in the art can understand that the buoyancy unit and the connection unit 300 provided on the dynamic cable 100 are used to define the line shape of the dynamic cable 100, so that the dynamic cable 100 can meet the drift of the floating fan 700. The connection unit 300 includes the mooring chain 310 and the elastic cable. The mooring chain 310 and the elastic cable limit the maximum distance between the position, where the dynamic cable 100 connects with the mooring chain 310, and the seabed 800, so as to prevent the dynamic cable 100 as a whole from drifting in a wide range under adverse conditions, such as an impact of currents in a direction perpendicular to the line shape of the dynamic cable 100, and thus prevent the dynamic cable 100 from collision with the anchor chain of floating fan 700 or the floating fan 700, and furthermore, the elastic cable 320 will stretch elastically when the dynamic cable 100 is subjected to a large impact, so as to absorb the impact load on the dynamic cable 100. The dynamic cable 100 can have a high degree of integrity, that is, the structure of the dynamic cable 100 will not be damaged by the collision, ensuring stability of the dynamic cable 100 in transmitting power and/or signals.

As shown in FIGs. 1-3, the elastic cable 320 includes a first connecting plate 321, a second connecting plate 322 and a spring 323. Exemplarily, shapes of the first connecting plate 321 and the second connecting plate 322 can be circular, and the first connecting plate 321 and the second connecting plate 322 may be equal in size. The first connecting plate 321 is parallel to the second connecting plate 322, the first connecting plate 321 is provided above the second connecting plate 322, one end of the spring 323 is fixed to the first connecting plate 321, and the other end of the spring 323 is fixed to the second connecting plate 322. It is easy to understand that number of the spring 323 is not limited. Schematically, there are a plurality of springs 323, and the plurality of springs 323 are uniformly provided around an axis of the first connecting plate 321 and the second connecting plate 322. A through hole is provided in the middle of the first connecting plate 321, and a part of the mooring chain 310 near the bottom end of the mooring chain 310 passes through inside the through hole of the first connecting plate 321 and is fixedly connected with the first connecting plate 321. Where, the mooring chain 310 and the through hole of the first connecting plate 321 can be fixed in many ways. For example, the mooring chain 310 can be fixed to the first connecting plate 321 by welding after passing through the through hole of the first connecting plate 321. Those skilled in the art can understand that when the impact borne by the dynamic cable 100 is too large, the spring 323 between the first connecting plate 321 and the second connecting plate 322 extends, so that it can play a buffering role. That is to say, the elastic cable 320 absorbs the impact load on the dynamic cable 100 through elastic extension to avoid the damage to the dynamic cable 100 at the position where the dynamic cable 100 is connected with the mooring chain 310 due to excessive impact.

As shown in FIG. 4, the connection unit 300 also includes a monitoring component 330 and an anchor 340. The monitoring component 330 is provided with a wireless communication module, that is, the monitoring component 330 can be communicatively connected to a remote device through the wireless communication module. Exemplarily, the wireless communication module includes acoustic energy converter and acoustic wave transmitter, the remote device includes acoustic wave receiver system, and meanwhile, the remote device is provided with a display component, and a worker can know status of the dynamic cable 100 through information displayed by the display component. A main body of the monitoring component 330 is fixedly connected with the dynamic cable 100, and the monitoring component 330 is also provided with a power transmission line connected with the main body of the monitoring component 330. Exemplarily, the main body of the monitoring component 330 also includes a stress module, a displacement module and a temperature module, where the stress module is used to monitor stress at a position where the dynamic cable 100 is connected with the monitoring component 330, and it can be a stress sensor; the temperature module is used to monitor temperature at the position where the dynamic cable 100 is connected with the monitoring component 330, and it can be an infrared temperature sensor; the displacement module is used to monitor height at the position where the dynamic cable 100 is connected with the monitoring component 330, and it can be a radar displacement sensor or a laser displacement sensor and the like. The stress module, displacement module and the temperature module are connected to the remote device through wireless communication module, so that a remote worker can know a specific status of the dynamic cable 100 through the remote device. This embodiment does not limit structure of the monitoring component 330 here, those skilled in the art can select any suitable monitoring component 330 according to actual needs, and of course, they can select a commercially available monitoring component 330.

In one possible implementation, a power transmission line of the monitoring component 330 is provided with an armor layer to ensure that the power transmission line of the monitoring component 330 has sufficient tensile strength. The mooring chain 310 is the power transmission line of the monitoring component 330, that is, the power transmission line of the monitoring component 330 is used as the mooring chain 310. This embodiment does not limit the structure of the monitoring component 330 here. Those skilled in the art can select any suitable monitoring component 330 according to actual needs, and of course, they can select a commercially available monitoring component 330. The anchor 340 is fixedly connected with the seabed 800. FIG. 4 shows that the anchor 340 can be a rectangular block structure, and can be buried inside the seabed 800 or fastened to the seabed 800 through a pin. Of course, the anchor 340 may also be in other suitable shapes, and those skilled in the art can select the shape of the anchor 340 according to actual needs. The second connecting plate 322 is installed on top of the anchor 340. Exemplarily, the second connecting plate 322 may be installed to the top of the anchor 340 through a fastener such as screw. An interior of the anchor 340 is provided with a power supply, which may be a battery or other power supply device. A bottom end of the power transmission line passes through a through hole of the second connecting plate 322 and is connected with the power supply inside the anchor 340.

Those skilled in the art can understand that by providing the monitoring component 330 and using the power transmission line of the monitoring component 330 as the mooring chain 310, the monitoring component 330 can monitor the stress and displacement status at the position where the dynamic cable 100 is connected with the mooring chain 310. When the stress and the displacement at the position exceeds a preset value, for example, when the stress at the position where the dynamic cable 100 is connected with the mooring chain 310 is too large or there are too many marine organisms attached to the dynamic cable 100, the monitoring component 330 may send an alarm signal to the remote device through the wireless communication module to remind the worker of the abnormal condition of the dynamic cable 100.

It is worth mentioning that a part of the power transmission line of the monitoring component 330 between the first connecting plate 321 and the second connecting plate 322 has a length longer than the maximum length to which the spring 323 can be stretched. That is to say, the part of the power transmission line of the monitoring component 330 between the first connecting plate 321 and the second connecting plate 322 has a certain reserve to ensure that the spring 323 of the elastic cable 320 will not be pulled off when it is stretched.

FIG. 1, FIG. 4, FIG. 9 and FIG. 10 show that the first end of the dynamic cable 100 is also provided with a bend limiting cylinder 500, which is made of an elastic material such as polyester amine. Use of the flexible material for making the bend limiting cylinder 500 allows the bend limiting cylinder 500 to have a small amount of bending. The bend limiting cylinder 500 is formed as a conical structure. A large diameter end of the conical structure is provided with a plurality of bolts 510 which are fastened to the floating fan 700. Exemplarily, the plurality of bolts 510 are spaced around an axis of the bend limiting cylinder 500, and the bolts 510 extend in a direction parallel to the axis of the bend limiting cylinder 500. It is easy to understand that the floating fan 700 is provided with a flange for fastening to the large diameter end of the bend limiting cylinder 500. The flange is provided with a plurality of through holes matching with the bolts 510, and the large diameter end of the bend limiting cylinder 500 can be fastened to the floating fan 700 through the bolts 510 and the flange. It is worth mentioning that a central part of the bend limiting cylinder 500 is provided with a through hole which is coaxial with the bend limiting cylinder 500. The first end of the dynamic cable 100 is provided to pass inside the conical structure, this is, pass through the through hole in the central part of the bend limiting cylinder 500, and is fixedly connected with the floating fan 700.

Those skilled in the art can understand that the first end of the dynamic cable 100 is provided with the bend limiting cylinder 500, the bend limiting cylinder 500 is formed into a conical structure and the large diameter end of the conical structure is fastened to the floating fan 700, the first end of the dynamic cable 100 is provided to pass inside the conical structure and is fixedly connected with the floating fan 700, the bend limiting cylinder 500 wrapped at the first end of the dynamic cable 100 can prevent excessive bending of the dynamic cable 100 at the position where the dynamic cable 100 is connected with the floating fan 700, and thus, the first end of the dynamic cable 100 can be prevented from being damaged due to stress concentration, and transmission stability of the dynamic cable 100 can be guaranteed.

Preferably, as shown in FIG. 1 and FIG. 4, the axis of the bend limiting cylinder 500 is set obliquely. Exemplarily, when the floating fan 700 does not drift, an extension direction of the axis of the bend limiting cylinder 500 is the same as that of the first end of the dynamic cable 100.

As shown in FIG. 1 and FIGs. 4-6, the buoyancy unit includes a plurality of buoyancy blocks 200, which are fastened to the dynamic cable 100. It is easy to understand that the buoyancy blocks 200 may be made of a buoyant material, and a density of the buoyant material is less than the density of sea water, so that the buoyancy blocks 200 may provide upward buoyancy for the dynamic cable 100 in the sea water. Exemplarily, the buoyant blocks 200 are formed as a cylindrical structure, and the buoyant blocks 200 are sleeved on the dynamic cable 100, and are fastened to the dynamic cable 100. It is worth mentioning that a cross section of the buoyancy blocks 200 is not limited to a circular shape. For example, the cross section of the buoyancy blocks 200 may also be in any suitable shape such as square shape or polygonal shape. The plurality of buoyancy blocks 200 are arranged at intervals along the extension direction of the dynamic cable 100. It is easy to understand that the number of the buoyancy blocks 200 in each buoyancy unit is not limited, and those skilled in the art can set them according to actual needs. Setting the number of the buoyant blocks 200 as plurality can increase net buoyancy of the buoyant unit, so that load-bearing capacity of the dynamic cable 100 can be increased, and it is not easy for marine organisms such as seashells and seaweeds breeding on the dynamic cable 100 to lower the line shape of the dynamic cable 100, thus reducing the risk of collision between the dynamic cable 100 and the seabed 800.

It is worth mentioning that for the existing dynamic cable 100, in order to make the line shape of the dynamic cable 100 form a preset shape, volume of the buoyancy material of the buoyancy block 200 need to be accurately calculated to make net buoyancy of the buoyancy unit reach a preset value. For the dynamic cable assembly provided in this embodiment, the dynamic cable 100 is connected with the seabed 800 through the elastic cable 320 and the mooring chain 310 of the connection unit 300, the net buoyancy of the buoyancy unit can exceed the preset value of the buoyancy unit in the existing dynamic cable assembly, and the elastic cable 320 and the mooring chain 310 can prevent the dynamic cable 100 from rising to the sea surface 900 under the buoyancy of the buoyancy block 200. That is to say, design and selection of the buoyancy block 200 of the dynamic cable assembly provided by this embodiment has a large margin, and at the same time, an assembling error and a construction error of the buoyancy block 200 also have a large margin, and thus assembling efficiency of the dynamic cable assembly can be improved.

Exemplarily, a spacing between two adjacent buoyancy blocks 200 in the buoyancy unit is 1-2 times the length of the buoyancy blocks 200. Those skilled in the art can understand that the dynamic cable 100 bends downward between the two adjacent buoyancy blocks 200 under the action of its own gravity, and setting the spacing between the two adjacent buoyancy blocks 200 as 1-2 times the length of the buoyancy blocks 200 can avoid excessive bending of the dynamic cable 100 in an area between the two buoyancy blocks 200, thus ensuring the stability of the dynamic cable 100 in transmission of the power and/or signals.

As shown in FIG. 4 and FIGs. 7-8, it is worth mentioning that the main body of the monitoring component 330 is connected with the dynamic cable 100 through a bend limiting caliper 400, the bend limiting caliper 400 is used to limit a bending radius at the position where the dynamic cable 100 is connected with the mooring chain 310, namely, the power transmission line of the monitoring module 330, to avoid rupture of the outer sheath of the dynamic cable 100 and failure of functional units of the dynamic cable 100 due to the stress concentration caused by excessive bending of the dynamic cable 100. Specifically, the bend limiting caliper 400 includes a clamping section 410 and two cone sections 420, where the two cone sections 420 are respectively located at two sides of the clamping section 410, the cone sections 420 are made of an elastic material such as polyester amine so that the cone sections 420 can be slightly bent. Large diameter ends of the cone sections 420 are fixedly connected with the clamping section 410, for example, the large diameter ends of the cone sections 420 can be fixed to the clamping section 410 through a flange. The dynamic cable 100 is provided to pass inside the two cone sections 420, and the clamping section 410 is fastened to a portion of the dynamic cable 100 located between the two cone sections 420. FIGs 7-8 show that the clamping section 410 includes two buckled parts, and the two buckled parts define a cylindrical structure. During the assembling of the clamping section 410 and the dynamic cable 100, the dynamic cable 100 is provided to pass between the two buckled parts and is clamped by the two buckled parts. The two buckled parts can be fastened by a fastener. Further, a glue can be injected between the dynamic cable 100 and the two buckled parts to improve stability of connection between the dynamic cable 100 and the clamping section 410. The dynamic cable 100 being provided to pass inside the two cone sections 420 and a portion of the dynamic cable 100 between the two cone sections 420 being clamped by the two buckled parts of the clamping section 410 can also increase fatigue resistance of the dynamic cable 100, that is, the dynamic cable 100 is not easy to break when repeatedly bent, thus improving the service life of the dynamic cable 100. The main body of the monitoring component 330 is fastened to the clamping section 410. For example, the main body of the monitoring component 330 can be fastened to the clamping section 410 of the bend limiting caliper 400 by a screw.

As shown in FIG. 4 and FIGs. 11-12, the dynamic cable assembly also includes a clump weight 600, the clump weight 600 is fastened to the dynamic cable 100, and is installed to the first valley section 110. Exemplarily, the clump weight 600 is also a cylindrical structure defined by the two buckled parts. The clump weight 600 is sleeved on the dynamic cable 100 and fastened to the dynamic cable 100. It is easy to understand that a density of material of the clump weight 600 is greater than that of the sea water, so that when the clump weight 600 is fastened to the dynamic cable 100, the clump weight 600 can exert downward gravity on the dynamic cable 100. Where there may be a plurality of clump weights 600, and the plurality of clump weights 600 are set at intervals along the extension direction of the dynamic cable 100. Those skilled in the art can understand that by providing the clump weight 600 on the dynamic cable 100, the clump weight 600 exerts a downward gravity on the dynamic cable 100, and the gravity of the clump weight 600 can prevent a part of the dynamic cable 100 between the floating fan 700 and the buoyancy unit from floating above the sea surface 900. In addition, the gravity of the clump weight 600 and the buoyancy of the buoyancy unit make the line shape of the dynamic cable 100 include the first valley section 110 connected with the floating fan 700 and the peak section 120 connected with the first valley section 110. That is to say, by providing the clump weight 600, the dynamic cable 100 can form a preset line shape in the sea water, thus improving the ability of the dynamic cable 100 to resist the impact of currents and waves.

### Embodiment 2

This embodiment also provides a shallow water floating wind power system, including a floating fan, a static cable and the dynamic cable assembly in Embodiment 1.

The floating fan floats on the sea surface, exemplarily, the floating fan includes a fan, a central tower and a floating platform, where the fan may be three-bladed, and the fan is installed to top of the central tower, a bottom of the central tower is provided on the floating platform, the floating platform may be, for example, a Spar (single-column), barge or semi-submersible platform, which is not limited in this embodiment. The static cable is fixed to a seabed, for example, the static cable may be fastened to a surface of the seabed by a fastener. One end of the dynamic cable in the dynamic cable assembly is electrically connected with the floating fan, for example, one end of the dynamic cable may be suspended from the floating platform of the floating fan and electrically connected with the fan on the floating platform, and the other end thereof is electrically connected with the static cable, so that when sea wind drives the fan to rotate, power generated by the fan can be transmitted by the dynamic cable and the static cable.

Since the shallow water floating wind power system provided by this embodiment uses the dynamic cable assembly in Embodiment 1, when the sea condition is severe, the dynamic cable will not drift in a wide range and thus will not collide with the floating fan or the anchor chain of the floating fan, which results in failure.

In the description of the present application, it is necessary to understand that orientation or position relationship indicated by the terms "top", "bottom", "up", "down" (if any) is based on the orientation or position relationship shown in the accompanying drawings, and is only for the convenience of describing the present application and simplifying the description, rather than indicating or implying that the device or element referred to must have a specific orientation, be constructed and operated in a specific orientation. Therefore, they cannot be understood as a limitation of the present application.

In the description of the present application, it should be noted that unless otherwise specified and defined, the terms "installation", "attachment" and "connection" should be understood in a broad sense, for example, they can be fixed connection, removable connection, or integrated connection; they can be mechanical connection or electrical connection; they can be directly connected, or indirectly connected through an intermediate medium, or they can be internal communication of two components. For those skilled in the art, the specific meanings of the above terms in the present application can be understood according to specific circumstances.

The terms "first" and "second" in the description, claims and the above brief description of the drawings of the present application are used to distinguish similar objects, and are not necessarily used to describe a particular order or sequence. It should be understood that figures used in this way can be interchanged in appropriate cases, so that the embodiments of the present application described herein for example can be implemented in an order other than those illustrated or described herein.

The scope of the present invention is defined in the appended set of claims.

## Claims

1. A dynamic cable assembly for a shallow water floating wind power system, comprising;
a dynamic cable (100), a first end of which is used to connect a floating fan (700), and a second end of which is used to connect a static cable;
a plurality of buoyancy units, provided on the dynamic cable at intervals;
a plurality of connection units, each comprising a mooring chain (310) and **characterized in that** the plurality of connection units further comprise an elastic cable,
wherein a bottom end of the elastic cable is fixedly connected with a seabed, a top end of the elastic cable is fixedly connected with a portion of the mooring chain near a bottom end of the mooring chain, and a top end of the mooring chain is fixedly connected with the dynamic cable;
the connection units and the buoyancy units jointly define a line shape of the dynamic cable, the line shape of the dynamic cable comprises a first valley section (110) connected with the floating fan, a plurality of peak sections (120) connected with the first valley section and a second valley section (130) between two adjacent peak sections; each buoyancy unit is correspondingly provided at top of one peak section, and each connection unit is correspondingly provided at a side of one peak section away from the floating fan.

2. The dynamic cable assembly according to claim 1, **characterized in that**, the elastic cable comprises a first connecting plate, a second connecting plate and a spring, the first connecting plate is parallel to the second connecting plate, the first connecting plate is provided above the second connecting plate, one end of the spring is fixed to the first connecting plate, and the other end of the spring is fixed to the second connecting plate; a through hole is provided in middle of the first connecting plate, a portion of the mooring chain near the bottom end of the mooring chain is provided to pass inside the through hole of the first connecting plate and is fixedly connected with the first connecting plate.

3. The dynamic cable assembly according to claim 2, **characterized in that**, the connection units further comprise a monitoring component and an anchor, the monitoring component is provided with a wireless communication module, a main body of the monitoring component is fixedly connected with the dynamic cable, and the mooring chain is a power transmission line of the monitoring component;
the anchor is fixedly connected with the seabed, and the second connecting plate is installed at top of the anchor, a middle part of the second connecting plate is provided with a through hole, an interior of the anchor is provided with a power supply, and a bottom end of the power transmission line passes through the through hole of the second connecting plate and is connected with the power supply in the interior of the anchor.

4. The dynamic cable assembly according to claim 3, **characterized in that**, a length of a portion of the power transmission line between the first connecting plate and the second connecting plate is greater than a maximum length to which the spring is stretched.

5. The dynamic cable assembly according to claim 3, **characterized in that**, the main body of the monitoring component is connected with the dynamic cable through a bend limiting caliper, the bend limiting caliper comprises a clamping section and two cone sections provided at both sides of the clamping section, the cone section is made of an elastic material and a large diameter end of the cone section is fixedly connected with the clamping section; the dynamic cable is provided to pass inside the two cone sections, and the clamping section is fastened to a part of the dynamic cable between the two cone sections; the main body of the monitoring component is fastened to the clamping section.

6. The dynamic cable assembly according to any one of claims 1-5, **characterized in that**, the buoyancy unit comprises a plurality of buoyancy blocks, the buoyancy blocks are fastened to the dynamic cable, and the plurality of buoyancy blocks are provided at intervals along an extension direction of the dynamic cable.

7. The dynamic cable assembly according to claim 6, **characterized in that**, a distance between two adjacent buoyancy blocks in the buoyancy unit is 1-2 times lengths of the buoyancy blocks.

8. The dynamic cable assembly according to any one of claims 1-5, **characterized in that**, it further comprises a bend limiting cylinder, the bend limiting cylinder is made of an elastic material, the bend limiting cylinder is formed into a conical structure, a large diameter end of the conical structure is provided with a plurality of bolts for fastening connection with the floating fan, and the first end of the dynamic cable is provided to pass inside the conical structure and is fixedly connected with the floating fan.

9. The dynamic cable assembly according to any one of claims 1-5, **characterized in that**, it further comprises a clump weight, the clump weight is fastened to the dynamic cable, and the clump weight is installed to the first valley section.

10. A shallow water floating wind power system, **characterized in that**, it comprises a floating fan, a static cable and the dynamic cable assembly according to any one of claims 1-9;
the floating fan floats on a sea surface, the static cable is fixed to the seabed, and one end of the dynamic cable in the dynamic cable assembly is electrically connected with the floating fan, and the other end of the dynamic cable is connected with the static cable.

## Patentansprüche

1. Dynamische Kabelanordnung für ein schwimmendes Flachwasser-Windkraftsystem, umfassend:
ein dynamisches Kabel (100), wobei ein erstes Ende davon verwendet wird, ein schwimmendes Gebläse (700) anzuschließen, und wobei ein zweites Ende davon verwendet wird, ein statisches Kabel anzuschließen;
eine Mehrzahl von Auftriebseinheiten, die an dem dynamischen Kabel in Intervallen vorgesehen sind;
eine Mehrzahl von Verbindungseinheiten, wobei jede eine Muringkette (310) umfasst und **dadurch gekennzeichnet, dass** die Mehrzahl von Verbindungseinheiten ferner ein elastisches Kabel umfassen, wobei ein unteres Ende des elastischen Kabels fest mit einem Meeresboden verbunden ist, ein oberes Ende des elastischen Kabels fest mit einem Teil der Muringkette nahe eines unteren Endes der Muringkette verbunden ist, und ein oberes Ende der Muringkette fest mit dem dynamischen Kabel verbunden ist;
wobei die Verbindungseinheiten und die Auftriebseinheiten zusammen eine Linienform des dynamischen Kabels definieren, wobei die Linienform des dynamischen Kabels einen ersten Talabschnitt (110), der mit dem schwimmenden Gebläse verbunden ist, eine Mehrzahl von Spitzenabschnitten (120), die mit dem ersten Talabschnitt verbunden sind, und einen zweiten Talabschnitt (130) zwischen zwei angrenzenden Spitzenabschnitten umfasst; wobei jede Auftriebseinheit entsprechend an der Oberseite eines Spitzenabschnitts vorgesehen ist, und jede Verbindungseinheit entsprechend an einer Seite eines Spitzenabschnitts entfernt von dem schwimmenden Gebläse vorgesehen ist.

2. Dynamische Kabelanordnung nach Anspruch 1, **dadurch gekennzeichnet, dass** das elastische Kabel eine erste Verbindungsplatte, eine zweite Verbindungsplatte und eine Feder umfasst, wobei die erste Verbindungsplatte parallel zu der zweiten Verbindungsplatte ist, wobei die erste Verbindungsplatte über der zweiten Verbindungsplatte vorgesehen ist, ein Ende der Feder an der ersten Verbindungsplatte befestigt ist, und das andere Ende der Feder an der zweiten Verbindungsplatte befestigt ist; ein Durchgangsloch in der Mitte der ersten Verbindungsplatte vorgesehen ist, ein Teil der Muringkette nahe des unteren Endes der Muringkette vorgesehen ist, um in das Durchgangsloch der ersten Verbindungsplatte zu verlaufen, und fest mit der ersten Verbindungsplatte verbunden ist.

3. Dynamische Kabelanordnung nach Anspruch 2, **dadurch gekennzeichnet, dass** die Verbindungseinheiten ferner eine Überwachungskomponente und einen Anker umfassen, wobei die Überwachungskomponente mit einem drahtlosen Kommunikationsmodul versehen ist, wobei ein Hauptkörper der Überwachungskomponente fest mit dem dynamischen Kabel verbunden ist, und die Muringkette eine Stromübertragungsleitung der Überwachungskomponente ist;
der Anker fest mit dem Meeresboden verbunden ist, und die zweite Verbindungsplatte auf der Oberseite des Ankers montiert ist, ein mittlerer Teil der zweiten Verbindungsplatte mit einem Durchgangsloch versehen ist, ein Inneres des Ankers mit einer Stromversorgung versehen ist und ein unteres Ende der Stromübertragungsleitung durch das Durchgangsloch der zweiten Verbindungsplatte verläuft und mit der Stromversorgung im Inneren des Ankers verbunden ist.

4. Dynamische Kabelanordnung nach Anspruch 3, **dadurch gekennzeichnet, dass** eine Länge eines Teils der Stromübertragungsleitung zwischen der ersten Verbindungsplatte und der zweiten Verbindungsplatte größer als eine maximale Länge ist, in die die Feder gedehnt wird.

5. Dynamische Kabelanordnung nach Anspruch 3, **dadurch gekennzeichnet, dass** der Hauptkörper der Überwachungskomponente mit dem dynamischen Kabel über einen biegungsbegrenzenden Messschieber verbunden ist, wobei der biegungsbegrenzende Messschieber einen Klemmabschnitt und zwei Kegelabschnitte umfasst, die an beiden Seiten des Klemmabschnitts vorgesehen sind, wobei der Kegelabschnitt aus einem elastischen Material hergestellt ist und ein Ende mit großem Durchmesser des Kegelabschnitts fest mit dem Klemmabschnitt verbunden ist; wobei das dynamische Kabel vorgesehen ist, um in die beiden Kegelabschnitte zu verlaufen, und der Klemmabschnitt an einem Teil des dynamischen Kabels zwischen den beiden Kegelabschnitten fixiert ist; wobei der Hauptkörper der Überwachungskomponente an dem Klemmabschnitt fixiert ist.

6. Dynamische Kabelanordnung nach einem der Ansprüche 1 bis 5, **dadurch gekennzeichnet, dass** die Auftriebseinheit eine Mehrzahl von Auftriebsblöcken umfasst, wobei die Auftriebsblöcke an dem dynamischen Kabel fixiert sind, und die Mehrzahl von Auftriebsblöcken in Intervallen entlang einer Erstreckungsrichtung des dynamischen Kabels vorgesehen ist.

7. Dynamische Kabelanordnung nach Anspruch 6, **dadurch gekennzeichnet, dass** ein Abstand zwischen zwei angrenzenden Auftriebsblöcken in der Auftriebseinheit 1 bis 2 Mal die Länge der Auftriebsblöcke ist.

8. Dynamische Kabelanordnung nach einem der Ansprüche 1 bis 5, **dadurch gekennzeichnet, dass** sie ferner einen biegungsbegrenzenden Zylinder umfasst, wobei der biegungsbegrenzende Zylinder aus einem elastischen Material hergestellt ist, wobei der biegungsbegrenzende Zylinder in eine konische Struktur geformt ist, wobei ein Ende mit großem Durchmesser der konischen Struktur mit einer Mehrzahl von Bolzen versehen ist, um eine Verbindung mit dem schwimmenden Gebläse zu fixieren, und das erste Ende des dynamischen Kabels vorgesehen ist, um in die konische Struktur zu verlaufen, und fest mit dem schwimmenden Gebläse verbunden ist.

9. Dynamische Kabelanordnung nach einem der Ansprüche 1 bis 5, **dadurch gekennzeichnet, dass** sie ferner ein Beschwerungsgewicht umfasst, wobei das Beschwerungsgewicht an dem dynamischen Kabel fixiert ist und das Beschwerungsgewicht an dem ersten Talabschnitt montiert ist.

10. Schwimmendes Flachwasser-Windkraftsystem, **dadurch gekennzeichnet, dass** es ein schwimmendes Gebläse, ein statisches Kabel und die dynamische Kabelanordnung nach einem der Ansprüche 1 bis 9 umfasst;
wobei das schwimmende Gebläse auf einer Meeresoberfläche schwimmt, das statische Kabel an dem Meeresboden befestigt ist und ein Ende des dynamischen Kabels in der dynamischen Kabelanordnung elektrisch mit dem schwimmenden Gebläse verbunden ist, und das andere Ende des dynamischen Kabels mit dem statischen Kabel verbunden ist.

## Revendications

1. Ensemble de câble dynamique pour un système d'énergie éolienne flottant sur eau peu profonde, comportant :
un câble dynamique (100), dont une première extrémité est utilisée pour relier un ventilateur flottant (700), et dont une deuxième extrémité est utilisée pour relier un câble statique ;
une pluralité d'unités de flottabilité, prévues sur le câble dynamique à intervalles ;
une pluralité d'unités de liaison, comportant chacune une chaîne d'amarrage (310) et **caractérisé en ce que** la pluralité d'unités de liaison comportent en outre un câble élastique,
dans lequel une extrémité inférieure du câble élastique est reliée à demeure à un fond marin, une extrémité supérieure du câble élastique est reliée à demeure à une portion de la chaîne d'amarrage près d'une extrémité inférieure de la chaîne d'amarrage, et une extrémité supérieure de la chaîne d'amarrage est reliée à demeure au câble dynamique ;
les unités de liaison et les unités de flottabilité définissent conjointement une forme linéaire du câble dynamique, la forme linéaire du câble dynamique comporte une première section de creux (110)
reliée au ventilateur flottant, une pluralité de sections de pic (120)
reliées à la première section de creux et à une deuxième section de creux (130)
entre deux sections de pic adjacentes ; chaque unité de flottabilité est prévue en conséquence au sommet d'une section de pic, et chaque unité de liaison est prévue en conséquence au niveau d'un côté d'une section de pic éloignée du ventilateur flottant.

2. Ensemble de câble dynamique selon la revendication 1, **caractérisé en ce que** le câble élastique comporte une première plaque de liaison, une deuxième plaque de liaison et un ressort, la première plaque de liaison est parallèle à la deuxième plaque de liaison, la première plaque de liaison est prévue au-dessus de la deuxième plaque de liaison, une extrémité du ressort est fixée à la première plaque de liaison, et l'autre extrémité du ressort est fixée à la deuxième plaque de liaison ; un trou traversant est prévu au milieu de la première plaque de liaison, une portion de la chaîne d'amarrage près de l'extrémité inférieure de la chaîne d'amarrage est prévue pour passer à l'intérieur du trou traversant de la première plaque de liaison et est reliée à demeure à la première plaque de liaison.

3. Ensemble de câble dynamique selon la revendication 2, **caractérisé en ce que** les unités de liaison comportent en outre un composant de surveillance et un ancrage, le composant de surveillance est pourvu d'un module de communication sans fil, un corps principal du composant de surveillance est relié à demeure au câble dynamique, et la chaîne d'amarrage est une ligne de transmission de puissance du composant de surveillance ;
l'ancrage est relié à demeure au fond marin, et la deuxième plaque de liaison est installée en haut de l'ancrage, une partie centrale de la deuxième plaque de liaison est pourvue d'un trou traversant, un intérieur de l'ancrage est pourvu d'une alimentation électrique, et une extrémité inférieure de la ligne de transmission de puissance passe à travers le trou traversant de la deuxième plaque de liaison et est reliée à l'alimentation électrique à l'intérieur de l'ancrage.

4. Ensemble de câble dynamique selon la revendication 3, **caractérisé en ce qu'**une longueur d'une portion de la ligne de transmission de puissance entre la première plaque de liaison et la deuxième plaque de liaison est supérieure à une longueur maximale à laquelle le ressort est étiré.

5. Ensemble de câble dynamique selon la revendication 3, **caractérisé en ce que** le corps principal du composant de surveillance est relié au câble dynamique par un étrier limiteur de courbure, l'étrier limiteur de courbure comporte une section de serrage et deux sections coniques prévues de part et d'autre de la section de serrage, la section conique est constituée d'un matériau élastique et une extrémité de grand diamètre de la section conique est reliée à demeure à la section de serrage ; le câble dynamique est prévu pour passer à l'intérieur des deux sections coniques, et la section de serrage est attachée à une partie du câble dynamique entre les deux sections coniques ; le corps principal du composant de surveillance est attaché à la section de serrage.

6. Ensemble de câble dynamique selon l'une quelconque des revendications 1 à 5, **caractérisé en ce que** l'unité de flottabilité comporte une pluralité de blocs de flottabilité, les blocs de flottabilité sont attachés au câble dynamique, et la pluralité de blocs de flottabilité sont prévus à intervalles le long d'une direction d'extension du câble dynamique.

7. Ensemble de câble dynamique selon la revendication 6, **caractérisé en ce qu'**une distance entre deux blocs de flottabilité adjacents dans l'unité de flottabilité est de 1 à 2 fois les longueurs des blocs de flottabilité.

8. Ensemble de câble dynamique selon l'une quelconque des revendications 1 à 5, **caractérisé en ce qu'**il comporte en outre un vérin limiteur de courbure, le vérin limiteur de courbure est constitué d'un matériau élastique, le vérin limiteur de courbure est formé en une structure conique, une extrémité de grand diamètre de la structure conique est pourvue d'une pluralité de boulons pour la liaison d'attache au ventilateur flottant, et la première extrémité du câble dynamique est prévue pour passer à l'intérieur de la structure conique et est reliée à demeure au ventilateur flottant.

9. Ensemble de câble dynamique selon l'une quelconque des revendications 1 à 5, **caractérisé en ce qu'**il comporte en outre un contrepoids, le contrepoids est attaché au câble dynamique, et le contrepoids est installé sur la première section de creux.

10. Système d'énergie éolienne flottant sur eau peu profonde, **caractérisé en ce qu'**il comporte un ventilateur flottant, un câble statique et l'ensemble de câble dynamique selon l'une quelconque des revendications 1 à 9 ;
le ventilateur flottant flotte sur une surface maritime, le câble statique est fixé au fond marin, et une extrémité du câble dynamique dans l'ensemble de câble dynamique est reliée électriquement au ventilateur flottant, et l'autre extrémité du câble dynamique est reliée au câble statique.
